# EUROPEAN PATENT SPECIFICATION

(11) **EP 3 757 395 B1**
(45) Date of publication and mention of the grant of the patent: **07.06.2023**
(21) Application number: 19183312.8
(22) Date of filing: 28.06.2019
(51) Int. Cl.: F04D 13/06, F04D 29/046, F16C 23/04, F04D 29/62

(54) **ELECTRICAL PUMP DEVICE WITH CANNED MOTOR**
ELEKTRISCHE PUMPVORRICHTUNG MIT SPALTROHRMOTOR
DISPOSITIF DE POMPE ÉLECTRIQUE AVEC MOTEUR À ROTOR NOYÉ

(43) Date of publication of application: 30.12.2020
(73) Proprietor: Grundfos Holding A/S, 8850 Bjerringbro (DK)
(72) Inventor: BLASER, Georg, 71679 Asperg (DE)
(74) Representative: Patentanwälte Vollmann Hemmer Lindfeld Partnerschaft mbB

(56) References cited:
- EP-A1- 1 335 135
- JP-A- H09 112 479
- US-A- 4 822 256
- US-A1- 2005 220 653
- US-A1- 2013 221 769
- US-B1- 6 445 098

## Description

The invention relates to an electrical pump device in which the rotor and the stator are separated by a rotor can.

Such a pump device is for example known from EP 3 176 438 A1. This prior art discloses a pump device having a motor in which the rotor is centrally supported on a bearing ball. The rotor and the surrounding stator as well as the separating rotor can have a hemispherical shape. The bearing ball is arranged on a bearing carrier which is made in one piece with the spherical rotor can from a plastic material. If the rotor can is made from metal it is more difficult to form a bearing carrier or to attach a bearing carrier to this rotor can.

US 4,822,256 discloses a pump having a rotor can having a circular indentation in its body inside which the foot of a bearing carrier is supported by a pressed fit. JPH09-112479 A discloses a pump having a rotor can with a bearing carrier attached to the rotor can. The rotor can has a tubular protrusion engaging into the interior of the bearing holder. US 6,445,098 B1 discloses a pump having a rotor can made from plastic material having a bearing which is arranged in a cup-shaped recess formed on the bottom of the rotor can by injection moulding. US 2005/0220653 A1 discloses a magnetic drive for a pump having a can supporting a shaft which engages a recess in the bottom of the can.

In view of this it is the object of the invention to improve an electrical pump device with a rotor can separating stator and rotor such that it allows to connect an additional element to a wall of the rotor can in a simple and secure manner.

This object is achieved by an electrical pump device having the features defined in claim 1 and by a method for connecting at least one element to a wall of a rotor can having the features defined in claim 18. Preferred embodiments are defined in the dependent subclaims, the following description and the accompanying drawings.

The electrical pump device according to the invention comprises an electrical drive motor connected to a rotatable impeller of the pump. The motor comprises a stator and a rotor. The impeller is connected to the rotor so that it rotates together with the rotor. Furthermore, the stator and the rotor are separated by a rotor can or a separating element or cap, respectively. The rotor can separate the space containing the rotor from a space containing the stator such that the rotor can rotate inside a liquid, in particular the liquid to be pumped, whereas the stator is arranged in a dry environment.

According to the invention there is provided at least one further element which is connected to a bottom wall of the rotor can at an axial end of the can. This is the axial end opposite to the end of the can at which the impeller is arranged. The wall of the can, therefore, is the axial end furthest distanced from the impeller. The at least one element is connected to this wall, i.e. the bottom wall of the rotor can by a positive and/or press fit. By such mechanical connection using a positive and/or press fit, welding or soldering for connection can be avoided, whereby the assembly is simplified and a positioning of the element relative to the rotor can can be improved. The mechanical connection by use of a positive and/or press fit allows a specific deformation during the connection process whereby a centering of both components or a desired relative positioning can easily be achieved during the connection process.

The bottom wall may be completely closed in the region in which the further element is connected to the bottom wall. This has the advantage, that no sealing between the further element and the rotor can is required in the connecting region. However, according to an alternative embodiment the rotor can may have a hole or opening in the region in which the further element is connected to the rotor can. In this embodiment the opening may be closed by the further element attached to the rotor can. In this solution, preferably a sealing between the rotor can and the further element is achieved by the positive and/or press fit without use of an additional sealing. Nevertheless, a further sealing may be arranged in addition to this connection.

The at least one element may for example be a bearing carrier, a shaft, a bushing or a part of a deblocking device, or any other element to be attached to the rotor can. A bearing carrier may for example be used in a pump device having a spherical motor in which the rotor is supported on a central bearing. In those motors a bearing carrier in form of a column may be attached to the rotor can to support a part of the bearing in the center of the spherical stator or hemispherical stator, respectively. The connection of a shaft to the rotor can for example may be used in an electric motor having a stationary shaft with the rotor rotating around the shaft. Bushings or deblocking devices are known in wet running electric motors allowing to rotate the rotor or the rotor shaft from the outside of the rotor can or allowing to open the rotor can to manipulate the rotor or for de-aeration of the rotor space.

Preferably said at least one element is made of metal, plastic or ceramic material. The positive and/or press fit connection allows a secure connection of different materials, in particular materials which are difficult to be soldered or welded to one another.

As mentioned above, the motor may be a spherical or hemispherical motor. In such a motor the rotor can preferably is a spherical can having a spherical or hemispherical shape.

In a preferred embodiment of the invention the at least one element is a bearing carrier comprising a bearing member. Further preferred this bearing member may be a spherical bearing member or a bearing ball which is arranged on the axial end of the element opposite to the can. Such a bearing member preferably is made of metal or ceramic material having the desired properties for a bearing.

The rotor can preferably is made of metal, further preferred of sheet metal, like for example stainless steel. A metal rotor can has the advantage that the rotor can is very thin which is advantageous since the distance between rotor and stator can be minimized to improve the efficiency of the electric motor. The metal may for example have a thickness smaller than 0,6mm, preferably 0,4mm. Furthermore, by use of metal a required stiffness can easily be achieved which is important for example in view of the fluid pressure acting inside the rotor can. The use of sheet metal allows to produce the rotor can by a metal forming process like for example undrawing or deep-drawing or pressure forming.

According to a further preferred embodiment the at least one element engages into a depression formed in the bottom wall of the rotor can. Thereby, the element may be positioned or centered relative to the rotor can. Furthermore, the element is supported or fixed inside the depression formed in the bottom wall. Thereby a contact of the material of the rotor can to the outer circumference of the element is obtained, by which a pressing and/or frictional engagement can be achieved.

According to a further preferred embodiment of the invention, the at least one element is connected to the bottom wall of the rotor can by deformation of the material of the can. In particular, the material of the can may be deformed such that it engages with the element to achieve a positive and/or press fit. Preferably, the element is placed on the bottom of the rotor can in the first step and in a following step the material of the can is deformed to fixly engage with the element.

The at least one element is connected to the bottom wall of the rotor can by deforming at least one bulge, which at least one bulge is preformed in the wall of the rotor can. The bulge is preformed in the wall of the rotor can when shaping the rotor can or after shaping the rotor can prior to attaching the at least one element. The at least one element is attached to the rotor can in the area of the bulge and then, with the element placed on the bottom wall of the rotor can, the bulge is deformed to engage with the element and to hold the element on the bottom wall of the rotor can. By the deformation the positive and/or press fit between the element and the bottom wall of the rotor can is produced.

The at least one preformed bulge in the bottom wall of the rotor can according to a further preferred embodiment is surrounding a connection area being in contact with the at least one element, wherein the bulge preferably has a ring shape. In particular, the bulge may have the shape of a closed ring. The bulge, in particular if ring shaped encircles the connection area. The connection area preferably has a size and contour which correspond to a contact surface of the element coming into contact with this connection area. Preferably, the bulge has a shape and size corresponding to the outer circumference of the element coming into contact with the bottom wall of the can. Thus, when mounting the element on the rotor can, the element is placed in the connection area inside the contour defined by the bulge and then in a next step the bulge is deformed such that it engages with the adjacent portion of the element by a positive and/or press fit. In particular, the bulge is deformed such that it is moved inwards in radial direction towards the longitudinal axis of the element placed on the bottom wall of the rotor. By such a deformation the material of the bulge is pressed against the outer circumference of the element.

Preferably said bulge prior to its deformation for engaging with the element is substantially U-shaped in cross section. In particular, the bulge is formed such that it projects into the interior of the rotor can, but a reverse design with the bulge projecting to the outside would be possible, too. When attaching the element to the bottom wall the bulge is preferably arranged on the side of the outer circumference of the element adjacent to the bottom wall. Thus, a comparatively small deformation of the bulge may be sufficient to engage with the element in a positive and/or press fit.

Preferably the bottom wall of the rotor can encompasses a base at the axial end of said at least one element, i.e. the axial end of said at least one element coming into contact with the bottom wall of the rotor can. Preferably, the material of the bottom wall, in particular the described bulge, is deformed such that it extends around a protruding portion of the element so that a portion of the material of the bottom wall is arranged on a shoulder or surface of the element which is facing away from the bottom wall of the rotor can. By this, the element is fixed in its axial direction, i.e. a portion of the bottom wall of the rotor can is clamping a protruding portion of the element to fix the element in its axial direction, i.e. along an axis extending in a direction transverse to the bottom wall of the rotor can.

As mentioned before, a base of the element, i.e. a base portion adjacent to the bottom wall of the rotor can has a protruding portion protruding from the outer circumference of the element, i.e. in a direction transverse to the longitudinal direction of the element, which longitudinal direction extends normal to the bottom wall of the rotor can. Preferably, this protruding portion of the base of the element has a conical or truncated conical shape. Preferably, the cross section (normal to the longitudinal axis) of the base is greater in an area adjacent to the bottom wall of the rotor can than in an area further distanced from this wall. I.e. the protruding portion tapers in a direction away from the bottom wall of the rotor can. This design allows that the base and the protruding portion of the base can be encompassed by the deformed material of the bottom wall to fix the element on the bottom wall.

As mentioned above according to one embodiment of the invention, the at least one element may be a bearing carrier supporting a bearing member. The bearing member preferably is fixed onto this bearing carrier by a sleeve which embraces the bearing member and the bearing carrier. This means, the sleeve surrounds the bearing element and the bearing carrier and preferably is in tight engagement with both, the bearing element and the bearing carrier, to fix the bearing element on the bearing carrier. Preferably, the sleeve embraces or engages over an equator of a ball shaped bearing member. By this, the ball shaped bearing member is hold in axial direction along the longitudinal axis of the bearing carrier, i.e. in radial direction of the ball shaped bearing member.

According to a possible embodiment of the invention, the sleeve is pressed onto the outer periphery of the bearing carrier, in doing so preferably the sleeve is deformed such that it engages into one or more indentation on the outer periphery of the bearing carrier. By this engagement, a positive fit and/or press fit between the sleeve and the bearing carrier is effected such that the sleeve is firmly connected to the bearing carrier and at the same time can secure a bearing member on said bearing carrier.

In a possible embodiment said at least one element may have at least one positioning mark indicating a defined angular position in relation to the longitudinal axis of this element. The longitudinal axis preferably is the axis extending transverse to the bottom wall on which the element is fixed. Further preferably, the longitudinal axis extends normal to the bottom wall of the rotor can. Said positioning mark preferably is a recess and further preferred a recess being rotationally asymmetric about the mentioned longitudinal axis. The positioning mark can be used to position the element relative to further parts, for example the bottom wall and/or a sleeve attached to this element. In particular, such a positioning mark helps to position the element in form of a bearing carrier relative to a tool for pressing a sleeve onto this element. This is in particular important if the bearing carrier has indentations into which the material of the sleeve is deformed as mentioned before. In this case, it is important to position the indentations opposite to a respective pressing tool being able to deform the material of the sleeve into said indentation. For this relative positioning, the positioning mark can be used.

Preferably the at least one positioning mark is arranged on the axial end surface of the element facing the bottom wall of the rotor can. By such an arrangement the positioning mark can be used for positioning the element relative to a sleeve and/or tool for securing the sleeve onto the element. This positioning is carried out prior to attaching the element to the bottom wall of the rotor can. In particular in a first step a sleeve may be attached to the element forming a bearing carrier as described before. In a following step this assembly, for example consisting of a bearing member, the bearing carrier and the sleeve, is attached to the rotor can. After attachment to the rotor can and connection to the rotor can the positioning mark, then, is not visible any more, since it is covered by the bottom wall of the rotor can.

According to a further possible embodiment said positioning mark has a predefined angular position about the longitudinal axis in relation to at least one indentation into which a sleeve for fixing the bearing member engages. With such a design, the positioning mark can be used to position the bearing member relative to a tool for securing the sleeve on the bearing member, as described before.

In addition to the electrical pump device as described before, also a method for connecting at least one element to a bottom wall of a rotor can is subject of the present invention. This method is described in the following. The method preferably is used to produce an electrical pump device as described above. It has to be understood that method steps described in relation to the electrical pump device in the aforegoing description can be regarded as preferred features or steps of the method according to the invention, too. Furthermore, also features of a pump device described in the following in relation to the method according to the invention may be regarded as preferred features of a pump device as described before.

The method according to the invention is used to connect at least one element, preferably a bearing carrier, a shaft, a bushing or a part of a deblocking device to a bottom wall of a rotor can of a pump device. Concerning these preferred elements, it is referred to the aforegoing description of the pump device. In the first step, there is formed at least one bulge into the bottom wall of the rotor can such that a protruding part of the at least one bulge surrounds a connection area for said at least one element. Preferably the bulge forms a ring surrounding the connection area. The bulge may be formed when shaping the rotor can, for example by deep-drawing or another suitable metal forming method. In a second step, there is attached the at least one element to said bottom wall of the rotor can such that an axial end, i.e. a base end of the element, abuts against said connection area. In a following step, said bulge is deformed towards the outer circumference of said element such that the material forming the bulge is pressed against that element. By this deformation a press fit or positive fit between the bottom wall and the element is achieved. In particular, the element may have a base portion having a protruding portion as described before. Then, the material of the bulge is deformed to surround this protruding portion such that the protruding portion is encompassed by the material of the bottom wall to in particular secure the element in its axial direction on the bottom wall.

Preferably said protruding portion of the element extends in a radial direction relative to the longitudinal axis of the element from the outer circumference of the element. Further preferably, the protruding element may be a ring-shaped protrusion extending around the entire circumference of the element. Such a protruding portion has a shoulder or surface facing away from the bottom wall. The deformed material of the bulge comes into contact with this surface or shoulder such that the protruding portion and the entire base of the element is clamped by the material of the bottom wall.

In the following, the preferred embodiment of the invention is described with reference to the accompanying drawings. In this:
- Fig. 1: shows a cross section of an electrical pump device according to a first embodiment of the invention,
- Fig. 2: shows a cross section of the motor housing of the pump device according to Fig. 1,
- Fig. 3: shows a perspective exploded view of a bearing carrier of the electrical pump device according to Fig. 1 and Fig. 2,
- Fig. 4: shows a cross section of the rotor can and the bearing carrier of the pump device according to Fig. 1 and Fig. 2 prior to assembling,
- Fig. 5: shows a cross section of the bearing carrier and the rotor can according to Fig. 4 in a first assembling step,
- Fig. 6: shows a cross section of the rotor can and the bearing carrier according to Fig. 4 and Fig. 5 in a second assembling step,
- Fig. 7: shows a cross section of the motor housing with the attached rotor can and bearing carrier assembly as shown in Fig. 6,
- Fig. 8: shows a cross section of a rotor can with a deblocking device in a first assembling step.
- Fig. 9: shows a cross section of a rotor can with the deblocking device according to Fig. 8 in a second assembling step.
- Fig. 10: shows a cross section of a rotor can with a fixed shaft in a first assembling step, and
- Fig. 11: shows a cross section of a rotor can according to figure 10 in a second assembling step.

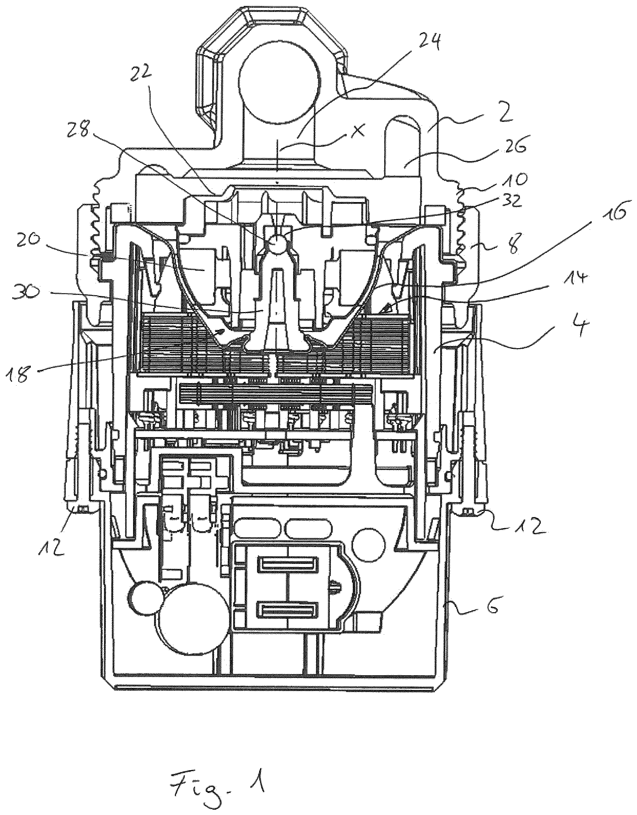

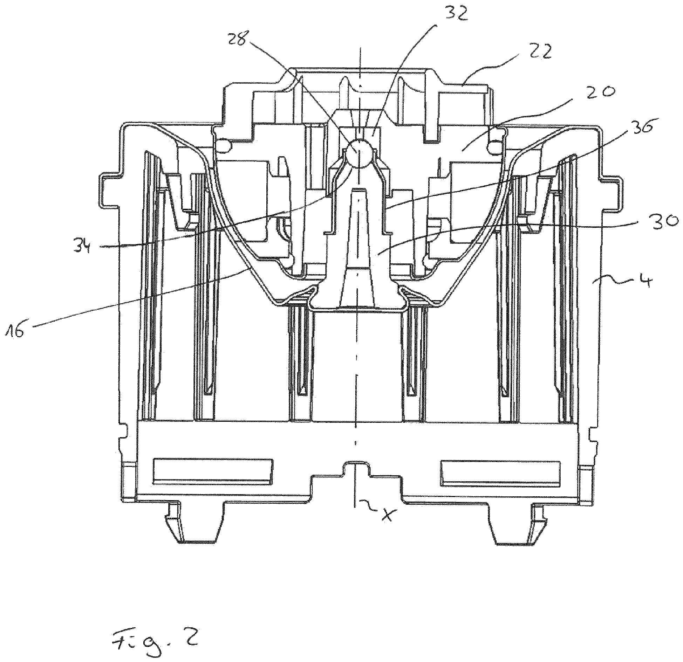

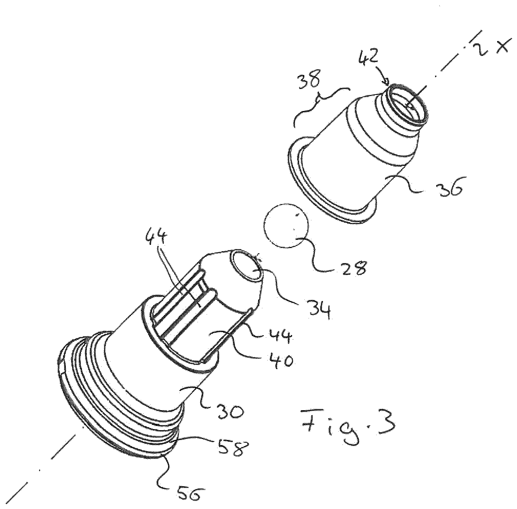

The first example of an electrical pump device shown in Fig. 1 to 7 is a pump device having a spherical motor. The pump device has a pump housing 2, a motor housing 4 which is attached to one axial end side of the pump housing 2, and an electronic housing 6 attached to an axial end side of the motor housing 4 opposite to the pump housing 2. The motor housing 4 is connected to the pump housing 2 via a connection or spigot nut 8 engaging with the thread on the outer circumference of the pump housing 2. The electronic housing 6 is connected to the motor housing 4 by screws 12.

Inside the motor housing 4 there is arranged a stator 14 of an electric drive motor. The stator 14 and circles a rotor can 16 made from sheet metal. The rotor can 16 separates a dry stator space inside which the stator 14 is arranged form the rotor space 18 which is filled with the liquid to be pumped during operation. Inside the rotor space 18 there is arranged a rotor 20 which for example may be a permanent magnet rotor. The rotor 20 is directly connected to an impeller 22 arranged inside the pump housing 2. The pump housing 2 comprises an inlet channel 24 leading towards the impeller 22 and an outlet channel 26 extending away from the impeller 22. The rotor 20 has a spherical shape, i.e. a hemispherical shape and is supported on a central bearing so that it is rotatable about a rotational axis X forming the longitudinal axis of the pump device. The central bearing is formed by a bearing ball 28 which is supported on a bearing carrier 30. The bearing carrier 30 is attached with its base or bottom end to the bottom wall of the rotor can 16 and extends in the longitudinal direction along the rotational axis X. On the free end of the bearing carrier 30 opposite to the bottom wall of the rotor can 16 there is fixed the bearing ball 28. The impeller 22 comprises a bearing shell 32 into which the bearing ball 28 engages such that the impeller 22 is supported by the contact between the bearing shell 32 and the bearing ball 28 on said bearing ball 28. The bearing ball 28 and the bearing shell 32 form a friction bearing. In this arrangement the liquid to be pumped, for example water, which is contained inside the rotor space 18 acts as a lubricant for this bearing. This kind of bearing allows the rotation of the impeller 22 around the rotational axis X and additionally a certain oscillating or pendulum motion, respectively, about an axis normal to the rotational axis X.

In the following the design of the bearing carrier 30 with the attached bearing ball 28 and the connection of the bearing carrier 30 and the rotor can 16 are described in more detail. The bearing carrier 30 has a shape of a pillar and is for example made from plastic material, in particular by injection moulding. The bearing ball 28 preferably is a bearing ball made from ceramic or hard metal. On its free end the bearing carrier 30 has a concave seat 34 having a radius corresponding to the radius of the bearing ball 28. The bearing ball 28 is placed on this seat 34 and then fixed by the sleeve 36 in this position. The sleeve 36 is from metal material, in particular sheet metal, and has two portions of different diameter. The first portion 38 has an inner diameter corresponding to the outer diameter of a receiving portion 40 of the bearing carrier 30. A second portion 42 of the sleeve 36 has a diameter slightly smaller than the diameter of the bearing ball 28. Thus, when attached to the bearing carrier 30 in direction of the rotational axis X the second portion 42 of the sleeve 36 comes into contact with the outer circumference of the bearing ball 28 above the equator of the bearing ball 28. Thus, the sleeve 36 embraces or engages over the equator of the bearing member or bearing ball 28 and, thus, the sleeve 36 can press the bearing ball 28 against the seat 34.

For fixing the sleeve 36 on the receiving portion 40 of the bearing carrier 30 the sleeve 36 is pressed and deformed in radial direction relative to the longitudinal axis X onto the receiving portion 40 by use of a suitable tool. Thereby a press fit between the outer surface of the receiving portion 40 and the inner surface of the sleeve 36 is achieved. Furthermore, the sleeve 36 during this pressing operation is deformed such that it engages into the indentations 44 in the outer surface of the receiving portion 40. In this example the indentations 44 are formed as grooves extending in longitudinal direction parallel to the longitudinal axis X. By deforming the material of the sleeve 36 such that it engages with the indentations 44 a higher friction between the sleeve 36 and the bearing carrier 30 and increased clamping forces between the sleeve 36 and the bearing carrier 30 can be achieved, such that the sleeve 36 is fixed to the bearing carrier 30 and securely holds the bearing ball 28 on the seat 34.

For deforming the sleeve 36 such that it engages into the indentations 44 it is required to place respective tools on the angular positions of the indentations 44 about the longitudinal axis X. This requires a rotational positioning of the bearing carrier 30 about the longitudinal axis X before pressing the sleeve 36 onto the bearing carrier 30. For this positioning purpose, a positioning mark in form of a recess 46 is formed in the bottom surface 48 of the bearing carrier 30. The recess is rotationally asymmetric about the longitudinal axis X and has a predefined angular position relative to the indentations 44. This allows to rotate the bearing carrier 30 about the longitudinal axis X to bring the indentations 44 in a required angular position whereby the desired angular position can be detected by detecting the angular position of the recess 46. This means that the indentations can be brought into the desired angular position by positioning the recess 46 in a certain angular position about the longitudinal axis X.

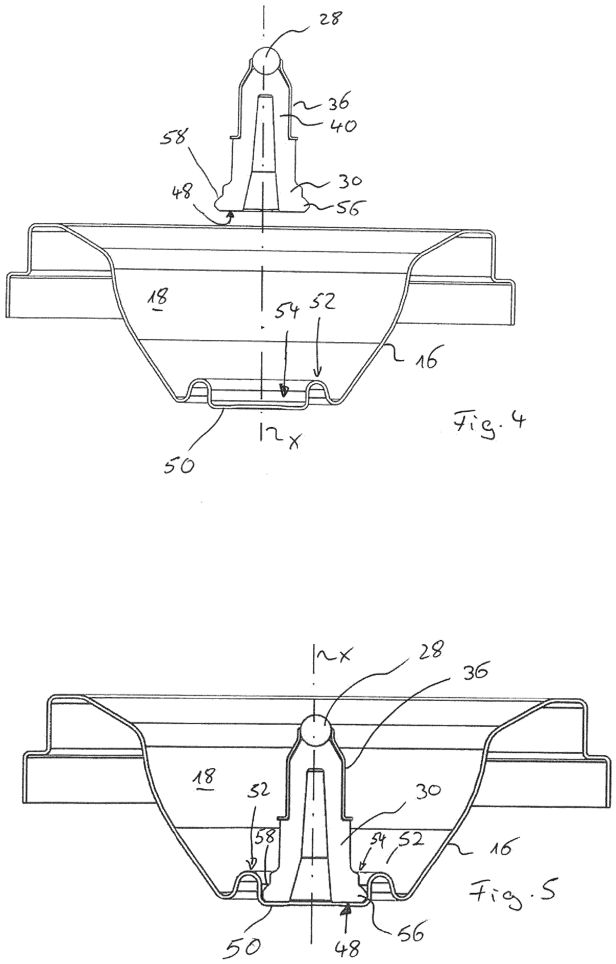

The bearing carrier 30 with the attached bearing ball 28 and secured by the sleeve 36 forms a preassembled unit which in a next assembling step is connected to the rotor can 16 as described with reference to Fig. 4 to 6. The rotor can 16 is a preformed part from sheet metal, in particular sheet metal having a thickness less than 0,6mm, preferably about 0,4mm. The rotor can 16 may be formed by deep-drawing or any other suitable metal forming process. The preformed rotor can 16 has a substantially hemispherical shape corresponding to the spherical shape of the rotor 20 but having a greater radius. The shape allows the described movement of the rotor 20 about its bearing point on the bearing ball 28 inside the rotor can 16. In the bottom wall of the rotor can 16 which extends substantially transverse to the longitudinal axis X there is preformed a ring-shaped bulge 52 having a substantially U-shaped cross section and cambering into the inside of the rotor can 16, i.e. into the rotor space 18. The bulge 52 encircles a connection area 54 of the bottom wall 50. The connection area 54 is of circular shape and has a shape and size corresponding to the bottom surface 48 on the base end of the bearing carrier 30.

The bearing carrier 30 has a protruding portion 56 protruding in radial direction from the outer circumference. The protruding portion 56 is adjacent to the bottom surface 48.

In the first assembly step the bearing carrier 30 is placed on the bottom wall 50 in the connection area 54 as shown in Fig. 5. The bottom surface 48 of the bearing carrier 30 comes into contact with the bottom wall 50 in the connection area 54. The protruding portion 56 of the bearing carrier 30 in this position is encircled by the bulge 52. As can be seen in Fig. 5 the bulge 52 has a height higher than the thickness of the protruding portion 56 in longitudinal direction X. As shown in Fig. 5 the outer circumference of the protruding portion 56 fits into the inner circumference of the bulge 52 so that, preferably, the bearing carrier 30 is positioned in radial direction relative to the longitudinal axis X by the inner circumference of the bulge 52.

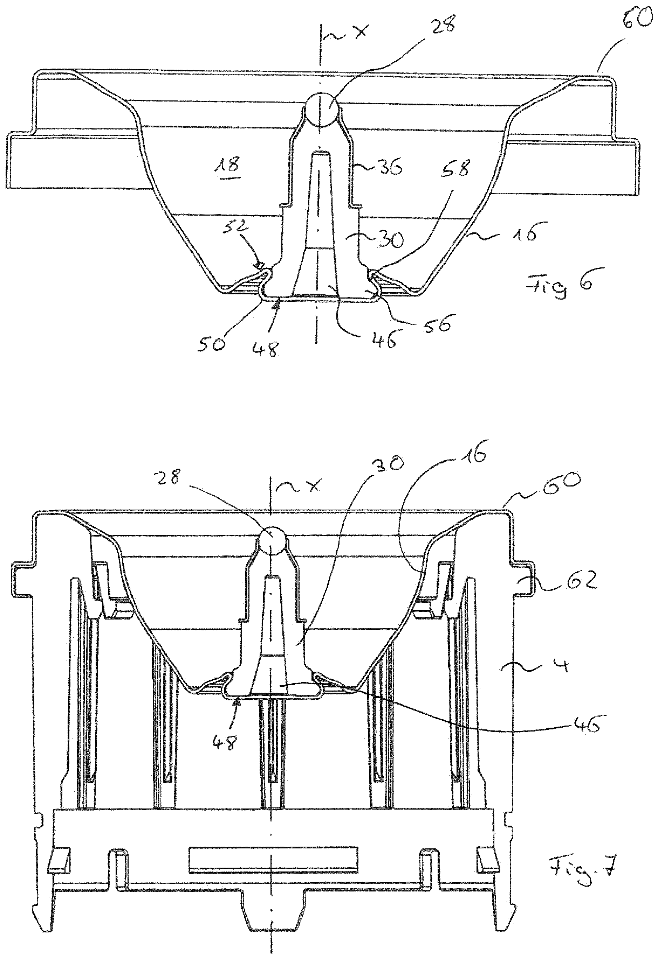

In the next assembling step, the bulge 52 is deformed as shown in Fig. 6. The bulge 52 is pressed inwardly towards the protruding portion 56 of the bearing carrier 30 such that the material of the rotor can 16 forming the bulge 52 is pressed on the upper side of the protruding portion 56 facing away from the bottom surface 48 and the bottom wall 50. The protruding portion 56 forms a shoulder 58 facing away from the bottom surface 48, i.e. in a direction along the longitudinal axis X towards the open end of the rotor can 16. The shoulder or surface is inclined towards the longitudinal direction X such that the protruding portion 56 has a substantially frustoconical or chamfered shape. By this deforming operation, the material of the bulge 52 is deformed such that it encompasses the protruding portion and securing the bearing carrier 30 at the bottom wall 50 of the rotor can 16. By this, a positive and press fit between rotor can 16 and bearing carrier 30, forming a separate element, is achieved. This allows a simple and secure connection between the bearing carrier made from plastic material and the rotor can 16 made from sheet metal, in particular stainless steel.

In the next step, the preassembled unit consisting of rotor can 16 and the bearing carrier 30 according to Fig. 6 is attached to the motor housing 4 as shown in Fig. 7. The rotor can 16 has a flange or collar 60 surrounding the open end, i.e. the axial end opposite to the bottom wall 50. This collar 60 surrounds the axial end of the motor housing 4 as shown in Fig. 7. The motor housing 4 has a circumferential protrusion 62 on its outer periphery. The rotor can 16 is fixed on the motor housing 4 by deforming the flange 60 such that it engages behind the ring-shaped protrusion 62 and encompasses the protrusion 62.

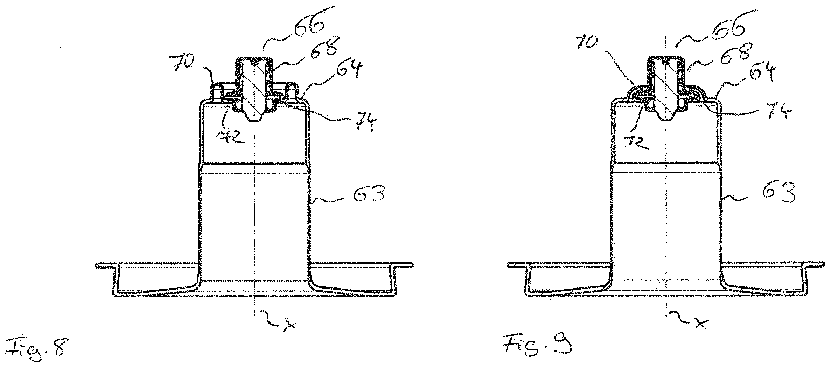

Fig. 8 and 9 show a second example for the present invention. Fig. 8 and 9 show a cross section of a cylindrical rotor can 63. In the bottom wall 64 on one axial end in direction of the longitudinal axis X there is arranged a deblocking device 66 which may be used to rotate a rotor arranged inside the rotor can 63 from the outside. The deblocking device 66 has an outer housing or sleeve 68 which is connected to the bottom wall 64 of the rotor can 62 in a manner similar to the connection of the bearing carrier 30 to the bottom wall 50 of the rotor can 16 according to the first embodiment described with reference to Fig. 1 to 7. In a first assembling step also in the second embodiment there is formed a bulge 70 in the bottom wall 64 surrounding an opening 72 into which the deblocking device 66 is inserted. After inserting the deblocking device 66 into the opening 72 this bulge 70 is deformed such it is bent inwardly and encompasses a radial protrusion 74 of the outer housing 68. Thus, the radial protrusion 74 is clamped between the bottom wall 64 surrounding the opening 72 and the deformed bulge 70. This allows to fix the deblocking device 66 in the rotor can 62 by a positive fit without welding.

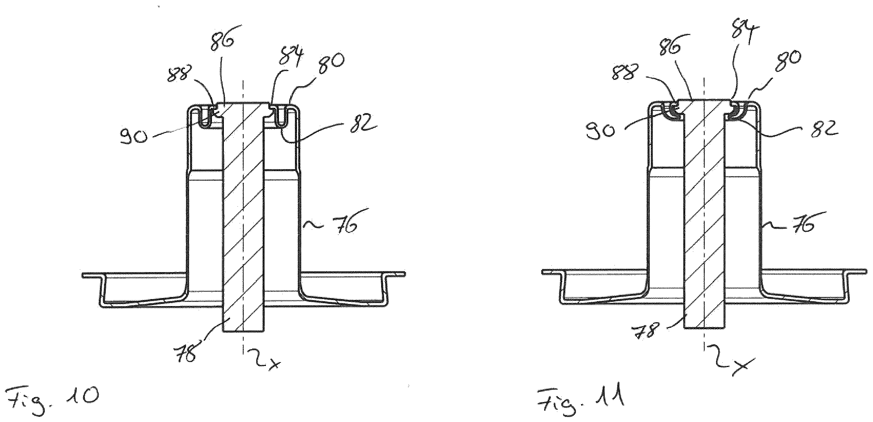

Figures 10 and 11 show a third example for the present invention. Figures 10 and 11 show a rotor can 76 of an electric pump motor. This rotor can is similar to the rotor can 63 shown in figures 8 and 9. Inside the rotor can 76 there is arranged a fixed shaft 78 for example from metal or ceramic material. This shaft 78 is used as a fixed shaft for a rotor rotating around this shaft. The rotor in this figure is not shown. The shaft 78 is connected to the bottom wall 80 in a way similar as the deblocking device 66 is connected to the bottom wall 64 in the second example shown in figures 8 and 9. The bottom wall 80 is arranged at an axial end of the rotor can 76 in direction of the longitudinal axis X. also in this embodiment there is formed a bulge 82 in the bottom wall 80, wherein the bottom wall 80 encircles an opening 84 into which the shaft 78 is inserted with its base 86. The bulge 82 is ring-shaped and encircles the opening 84 with a distance such that there is formed a shoulder or shroud 88 inside the bulge 82 and surrounding the opening 84. In this embodiment the bulge 82 is formed such that it extends into the interior of the can 76.

The base 86 of the shaft 78 has an enlarged diameter such that a ring-shaped radial protrusion 90 is formed on the outer circumference of the base 86. In the first assembling step this protrusion 90 is inserted into the ring-shaped bulge 82, i.e. into the circular inner space surrounded by the bulge 82. Thereby the bulge 82 extends in longitudinal direction X beyond the protrusion 90 of the base 86.

In the second assembly step the bulge 82 is bent inwardly and towards the bottom wall 90 such that it surrounds the protrusion 90 and comes into contact with the shoulder or surface of the protrusion 90 facing a way from the bottom wall 80. By this the bulge 82 encompasses the protrusion 90 and the protrusion 90 is clamped between the shoulder 88 and the deformed bulge 82. Thereby the shaft 78 is fixed in axial and radial direction inside the rotor can 76 by a positive fit without the need of welding or soldering.

In this embodiment the shaft 78 is attached to bottom wall 80 from the inside of the rotor can 76. However, in an alternative solution it would be possible to attach the shaft from the outside similar as the deblocking device 66 as shown in figures 8 and 9. In such embodiment the shaft 78 would extend through the opening 84 into the rotor can 76. Furthermore, differing from the shown embodiment, in case that the shaft 78 is attached to the rotor can from the inner side of the rotor can 76 as shown in figures 10 and 11 the opening 64 may be omitted such that the bottom wall 80 of the rotor can 76 would be closed similar as in the embodiment shown in figures 1-7.

### List of reference numerals

- 2: pump housing
- 4: motor housing
- 6: electronic housing
- 8: connection nut
- 10: thread
- 12: screws
- 14: stator
- 16: rotor can
- 18: rotor space
- 20: rotor
- 22: impeller
- 24: inlet channel
- 26: outlet channel
- 28: bearing ball
- 30: bearing carrier
- 32: bearing shell
- 34: seat
- 36: sleeve
- 38: first portion
- 40: receiving portion
- 42: second portion
- 44: indentation
- 46: recess
- 48: bottom surface
- 50: bottom wall
- 52: bulge
- 54: connection area
- 56: protruding portion
- 58: shoulder
- 60: flange
- 62: circumferential protrusion
- 63: rotor can
- 64: bottom wall
- 66: deblocking device
- 68: outer housing
- 70: bulge
- 72: opening
- 74: radial protrusion
- 76: rotor can
- 78: shaft
- 80: bottom wall
- 82: bulge
- 84: opening
- 86: base
- 88: shoulder
- 90: protrusion
- X: longitudinal/rotational axis

## Claims

1. An electrical pump device with a stator (14), a rotor (20) as well as with at least one impeller (22) which is connected to the rotor (20), wherein the stator (14) and the rotor (20) are separated by a rotor can (16), and with
at least one element (30) connected to a bottom wall (50) of the rotor can (16) on an axial end opposite to the at least one impeller (22), wherein the at least one element (30) is connected to the bottom wall (50) of the rotor can (16) by a positive and/or press fit, **characterized in that** said at least one element (30) is connected to the bottom wall (50) of the rotor can (16) by deforming at least one bulge (52), which at least one bulge (52) is preformed in the bottom wall (50) of the rotor can (16).

2. An electrical pump device according to claim 1, **characterized in that** said at least one element is a bearing carrier (30), a shaft (78), a bushing or a part of a deblocking device (66).

3. An electrical pump according to claim 1 or 2, **characterized in that** said at least one element (30) is made of metal, plastic or ceramic material.

4. An electrical pump according to one of the preceding claims, **characterized in that** said rotor can (16) is a spherical can.

5. An electrical motor according to one of the preceding claims, **characterized in that** said at least one element is a bearing carrier (30) comprising a bearing member (28) and preferably a bearing ball (28) on its axial end opposite to the can (16), wherein the bearing member (28) preferably is made of metal or ceramic material.

6. An electrical pump device according to one of the preceding claims, **characterized in that** the rotor can (16) is made of metal, preferably sheet metal.

7. An electrical pump device according to one of the preceding claims, **characterized in that** the at least one element (30) engages into a depression formed in the bottom wall (50) of the rotor can.

8. An electrical pump device according to one of the preceding claims, **characterized in that** the at least one element (30) is connected to the bottom wall (50) of the rotor can (16) by deformation of the material of the can (16).

9. An electrical pump device according to one of the preceding claims, **characterized in that** the at least one preformed bulge (52) is surrounding a connection area (54) being in contact with the at least one element (30), wherein the bulge (52) preferably has a ring shape.

10. An electrical pump device according to one of the preceding claims, **characterized in that** said bulge (52) prior to its deformation is substantially u-shaped in cross section.

11. An electrical pump device according to one of the preceding claims, **characterized in that** the bottom wall (50) of the rotor can (16) encompasses a base at the axial end (48) of said at least one element (30).

12. An electrical pump device according to claim 11, **characterized in that** the base has a protruding portion (56) protruding from the outer circumference of the element (30), wherein the protruding portion (56) preferably has a conical or truncated conical shape.

13. An electrical pump device according to one of the preceding claims, **characterized in that** said at least one element (30) is a bearing carrier supporting a bearing member (28) which is fixed onto the bearing carrier (30) by a sleeve (36) which embraces the bearing member (28) and the bearing carrier (30), wherein preferably the sleeve (36) embraces or engages over an equator of a ball shaped bearing member (28).

14. An electrical pump device according to claim 13, **characterized in that** the sleeve (36) is pressed onto the outer periphery of the bearing carrier (30), wherein preferably the sleeve (36) is deformed such that it engages into one or more indentation (44) on the outer periphery of the bearing carrier (30).

15. An electrical pump device according to one of the preceding claims, **characterized in that** said at least one element (30) has at least one positioning mark (46) indicating a defined angular position in relation to the longitudinal axis X of the element (30), wherein the longitudinal axis X extends normal to the bottom wall (50) of the rotor can (16), said positioning mark preferably being a recess and further preferred a recess (46) being rotationally asymmetric.

16. An electrical pump device according to claim 15, **characterized in that** the positioning mark (46) is arranged on the axial end surface (48) of the element (30) facing the bottom wall (50) of the rotor can (16).

17. An electrical pump device according to claim 14 and claim 15 or 16, **characterized in that** the positioning mark (46) has a predefined angular position about the longitudinal axis X in relation to at least one indentation (44) into which a sleeve (36) for fixing the bearing member engages.

18. Method for connecting at least one element, preferably a bearing carrier (30), a shaft (78), a bushing or a part of a deblocking device (66) to a bottom wall (50) of a rotor can (16) of a pump device **characterized by** the following steps:
- forming at least one bulge (52) into the bottom wall (50) of the rotor can (16) such that a protruding part of the at least one bulge (52) surrounds a connection area (54) for said at least one element (30),
- attaching said at least one element (30) to said bottom wall (50) of the rotor can (16) such that an axial end (48) of the element (30) abuts against said connection area (54)
- deforming said bulge (52) towards the outer circumference of said element (30) such that the material forming the bulge (52) is pressed against said element (30).

19. Method according to claim 18 **characterized in that** the bulge (52) is deformed such that it encompasses at least one protruding portion (56) of said at least one element (30), wherein said protruding portion (56) preferably extends in radial direction from the outer circumference of the element (30).

## Patentansprüche

1. Elektrische Pumpvorrichtung mit einem Stator (14), einem Rotor (20) sowie mit zumindest einem Laufrad (22), das mit dem Rotor (20) verbunden ist, wobei der Stator (14) und der Rotor (20) durch ein Rotorspaltrohr (16) getrennt sind, und mit zumindest einem Element (30), das mit einer Bodenwand (50) des Rotorspaltrohrs (16) an einem axialen Ende gegenüber dem zumindest einen Laufrad (22) verbunden ist, wobei das zumindest eine Element (30) mit der Bodenwand (50) des Rotorspaltrohrs (16) durch einen Formschluss und/oder eine Presspassung verbunden ist, **dadurch gekennzeichnet, dass** das zumindest eine Element (30) mit der Bodenwand (50) des Rotorspaltrohrs (16) durch Verformen von zumindest einer Ausbauchung (52) verbunden ist, wobei die zumindest eine Ausbauchung (52) in der Bodenwand (50) des Rotorspaltrohrs (16) vorgeformt ist.

2. Elektrische Pumpvorrichtung nach Anspruch 1, **dadurch gekennzeichnet, dass** das zumindest eine Element ein Lagerträger (30), eine Welle (78), eine Buchse oder eine Deblockiervorrichtung (66) ist.

3. Elektrische Pumpvorrichtung nach Anspruch 1 oder 2, **dadurch gekennzeichnet, dass** das zumindest eine Element (30) aus Metall, Kunststoff oder Keramikmaterial hergestellt ist.

4. Elektrische Pumpvorrichtung nach einem der vorhergehenden Ansprüche, **dadurch gekennzeichnet, dass** das Rotorspaltrohr (16) ein kugelförmiges Spaltrohr ist.

5. Elektromotor nach einem der vorhergehenden Ansprüche, **dadurch gekennzeichnet, dass** das zumindest eine Element ein Lagerträger (30) ist, der ein Lagerglied (28) und vorzugsweise eine Lagerkugel (28) an seinem axialen Ende gegenüber dem Spaltrohr (16) umfasst, wobei das Lagerglied (28) vorzugsweise aus Metall oder Keramikmaterial hergestellt ist.

6. Elektrische Pumpvorrichtung nach einem der vorhergehenden Ansprüche, **dadurch gekennzeichnet, dass** das Rotorspaltrohr (16) aus Metall, vorzugsweise Blech, hergestellt ist.

7. Elektrische Pumpvorrichtung nach einem der vorhergehenden Ansprüche, **dadurch gekennzeichnet, dass** das zumindest eine Element (30) in eine Vertiefung eingreift, die in der Bodenwand (50) des Rotorspaltrohrs ausgebildet ist.

8. Elektrische Pumpvorrichtung nach einem der vorhergehenden Ansprüche, **dadurch gekennzeichnet, dass** das zumindest eine Element (30) mit der Bodenwand (50) des Rotorspaltrohrs (16) durch Verformung des Materials des Spaltrohrs (16) verbunden ist.

9. Elektrische Pumpvorrichtung nach einem der vorhergehenden Ansprüche, **dadurch gekennzeichnet, dass** die zumindest eine vorgeformte Ausbauchung (52) einen Verbindungsbereich (54) umgibt, der mit dem zumindest einen Element (30) in Kontakt ist, wobei die Ausbauchung (52) vorzugsweise eine Ringform aufweist.

10. Elektrische Pumpvorrichtung nach einem der vorhergehenden Ansprüche, **dadurch gekennzeichnet, dass** die Ausbauchung (52) vor ihrer Verformung im Wesentlichen u-förmig im Querschnitt ist.

11. Elektrische Pumpvorrichtung nach einem der vorhergehenden Ansprüche, **dadurch gekennzeichnet, dass** die Bodenwand (50) des Rotorspaltrohrs (16) eine Basis am axialen Ende (48) des zumindest einen Elements (30) umgreift.

12. Elektrische Pumpvorrichtung nach Anspruch 11, **dadurch gekennzeichnet, dass** die Basis einen vorstehenden Abschnitt (56) aufweist, der vom Außenumfang des Elements (30) vorsteht, wobei der vorstehende Abschnitt (56) vorzugsweise eine kegelige oder kegelstumpfartige Form aufweist.

13. Elektrische Pumpvorrichtung nach einem der vorhergehenden Ansprüche, **dadurch gekennzeichnet, dass** das zumindest eine Element (30) ein Lagerträger ist, der ein Lagerglied (28) stützt, welches auf dem Lagerträger (30) durch eine Manschette (36) befestigt ist, die das Lagerglied (28) und den Lagerträger (30) umklammert, wobei die Manschette (36) vorzugsweise über einen Äquator eines kugelförmigen Lagerglieds (28) hinweg umklammert oder eingreift.

14. Elektrische Pumpvorrichtung nach Anspruch 13, **dadurch gekennzeichnet, dass** die Manschette (36) auf den Außenumfang des Lagerträgers (30) gepresst ist, wobei die Manschette (36) vorzugsweise derart verformt wird, dass sie in eine oder mehr Einkerbungen (44) am Außenumfang des Lagerträgers (30) eingreift.

15. Elektrische Pumpvorrichtung nach einem der vorhergehenden Ansprüche, **dadurch gekennzeichnet, dass** das zumindest eine Element (30) zumindest eine Positionierungsmarkierung (46) aufweist, die eine definierte Winkelposition in Bezug zur Längsachse X des Elements (30) anzeigt, wobei die Längsachse X senkrecht zur Bodenwand (50) des Rotorspaltrohrs (16) verläuft, wobei die Positionierungsmarkierung eine Aussparung ist und weiter bevorzugt eine Aussparung (46), die rotationsasymmetrisch ist, ist.

16. Elektrische Pumpvorrichtung nach Anspruch 15, **dadurch gekennzeichnet, dass** die Positionierungsmarkierung (46) auf der axialen Endfläche (48) des Elements (30) angeordnet ist, die der Bodenwand (50) des Rotorspaltrohrs (16) zugekehrt ist.

17. Elektrische Pumpvorrichtung nach Anspruch 14 und 15 oder 16, **dadurch gekennzeichnet, dass** die Positionierungsmarkierung (46) eine vordefinierte Winkelposition um die Längsachse in Bezug zu zumindest einer Einkerbung (44) aufweist, in die eine Manschette (36) zum Befestigen des Lagerglieds eingreift.

18. Verfahren zum Verbinden von zumindest einem Element, vorzugsweise einem Lagerträger (30), einer Welle (78), einer Buchse oder einem Teil einer Deblockiervorrichtung (66), mit einer Bodenwand (50) eines Rotorspaltrohrs (16) einer Pumpvorrichtung, **gekennzeichnet durch** die folgenden Schritte:
- derartiges Ausbilden von zumindest einer Ausbauchung (52) in der Bodenwand (50) des Rotorspaltrohrs (16), dass ein vorstehendes Teil der zumindest einen Ausbauchung (52) einen Verbindungsbereich (54) für das zumindest eine Element (30) umgibt,
- derartiges Anbringen des zumindest einen Elements (30) an der Bodenwand (50) des Rotorspaltrohrs (16), dass ein axiales Ende (48) des Elements (30) an den Verbindungsbereich (54) angrenzt,
- derartiges Verformen der Ausbauchung (52) zum Außenumfang des Elements (30) hin, dass das Material, das die Ausbauchung (52) ausbildet, an das Element (30) gepresst wird.

19. Verfahren nach Anspruch 18, **dadurch gekennzeichnet, dass** die Ausbauchung (52) derart verformt wird, dass sie zumindest einen vorstehenden Abschnitt (56) des zumindest einen Elements (30) umgreift, wobei der vorstehende Abschnitt (56) vorzugsweise in radialer Richtung vom Außenumfang des Elements (30) verläuft.

## Revendications

1. Dispositif de pompe électrique ayant un stator (14), un rotor (20) ainsi qu'avec au moins une turbine (22) qui est reliée au rotor (20), dans lequel le stator (14) et le rotor (20) sont séparés par un boîtier de rotor (16), et ayant
au moins un élément (30) relié à une paroi de fond (50) du boîtier de rotor (16) sur une extrémité axiale opposée à la au moins une turbine (22), dans lequel le au moins un élément (30) est raccordé à la paroi de fond (50) du boîtier de rotor (16) par un complémentarité de forme et/ou un ajustement serré,
**caractérisé en ce que** ledit au moins un élément (30) est raccordé à la paroi de fond (50) du boîtier de rotor (16) en déformant au moins un renflement (52), lequel au moins un renflement (52) étant préformé dans la paroi de fond (50) du boîtier de rotor (16).

2. Dispositif de pompe électrique selon la revendication 1, **caractérisé en ce que** ledit au moins un élément est un support de palier (30), un arbre (78), une douille ou une partie d'un dispositif de déblocage (66).

3. Pompe électrique selon la revendication 1 ou 2, **caractérisée en ce que** ledit au moins un élément (30) est constitué de métal, de matière plastique ou de matériau céramique.

4. Pompe électrique selon l'une des revendications précédentes, **caractérisée en ce que** ledit boîtier de rotor (16) est un boîtier sphérique.

5. Moteur électrique selon l'une des revendications précédentes, **caractérisé en ce que** ledit au moins un élément est un support de palier (30) comprenant un organe de palier (28) et de préférence une bille de palier (28) sur son extrémité axiale opposée au boîtier (16), dans lequel l'organe de palier (28) est de préférence constitué d'un métal ou d'un matériau céramique.

6. Dispositif de pompe électrique selon l'une des revendications précédentes, **caractérisé en ce que** le boîtier de rotor (16) est constitué de métal, de préférence un métal en feuille.

7. Dispositif de pompe électrique selon l'une des revendications précédentes, **caractérisé en ce que** le au moins un élément (30) vient en prise dans une dépression formée dans la paroi de fond (50) du boîtier de rotor.

8. Dispositif de pompe électrique selon l'une des revendications précédentes, **caractérisé en ce que** le au moins un élément (30) est raccordé à la paroi de fond (50) du boîtier de rotor (16) par déformation du matériau du boîtier (16).

9. Dispositif de pompe électrique selon l'une des revendications précédentes, **caractérisé en ce que** le au moins un renflement préformé (52) entoure une zone de raccordement (54) qui est en contact avec le au moins un élément (30), le renflement (52) ayant de préférence une forme annulaire.

10. Dispositif de pompe électrique selon l'une des revendications précédentes, **caractérisé en ce que** ledit renflement (52) avant sa déformation est sensiblement en forme de U en coupe transversa le.

11. Dispositif de pompe électrique selon l'une des revendications précédentes, **caractérisé en ce que** la paroi de fond (50) du boîtier de rotor (16) englobe une base au niveau de l'extrémité axiale (48) dudit au moins un élément (30).

12. Dispositif de pompe électrique selon la revendication 11, **caractérisé en ce que** la base présente une partie en saillie (56) faisant saillie depuis la circonférence extérieure de l'élément (30), dans lequel la partie en saillie (56) a de préférence une forme conique ou tronconique.

13. Dispositif de pompe électrique selon l'une des revendications précédentes, **caractérisé en ce que** ledit au moins un élément (30) est un support de palier supportant un organe de palier (28) qui est fixé sur le support de palier (30) par un manchon (36) qui étreint l'organe de palier (28) et le support de palier (30), dans lequel de préférence le manchon (36) étreint ou vient en prise sur un équateur d'un organe de palier en forme de bille (28).

14. Dispositif de pompe électrique selon la revendication 13, **caractérisé en ce que** le manchon (36) est pressé sur la périphérie extérieure du support de palier (30), dans lequel de préférence le manchon (36) est déformé de manière à venir en prise dans une ou plusieurs d'indentations (44) sur la périphérie extérieure du support de palier (30).

15. Dispositif de pompe électrique selon l'une des revendications précédentes, **caractérisé en ce que** ledit au moins un élément (30) comporte au moins un repère de positionnement (46) indiquant une position angulaire définie par rapport à l'axe longitudinal X de l'élément (30), dans lequel l'axe longitudinal X s'étend perpendiculairement à la paroi de fond (50) du boîtier de rotor (16), ledit repère de positionnement étant de préférence un évidement et de manière plus préférée un évidement (46) qui présente une asymétrie de rotation.

16. Dispositif de pompe électrique selon la revendication 15, **caractérisé en ce que** le repère de positionnement (46) est disposé sur la surface d'extrémité axiale (48) de l'élément (30) en vis-à-vis de la paroi de fond (50) du boîtier de rotor (16).

17. Dispositif de pompe électrique selon la revendication 14 et la revendication 15 ou 16, **caractérisé en ce que** le repère de positionnement (46) a une position angulaire prédéfinie autour de l'axe longitudinal X par rapport à au moins une indentation (44) dans laquelle vient en prise un manchon (36) pour fixer l'organe de palier.

18. Procédé de raccordement d'au moins un élément, de préférence un support de palier (30), un arbre (78), une douille ou une partie d'un dispositif de déblocage (66) à une paroi de fond (50) d'un boîtier de rotor (16) d'un dispositif de pompe **caractérisé par** étapes suivantes consistant à :
- former au moins un renflement (52) dans la paroi de fond (50) du boîtier de rotor (16) de sorte qu'une partie en saillie du au moins un renflement (52) entoure une zone de raccordement (54) pour ledit au moins un élément (30),
- fixer ledit au moins un élément (30) à ladite paroi de fond (50) du boîtier de rotor (16) de sorte qu'une extrémité axiale (48) de l'élément (30) vient buter contre ladite zone de raccordement (54)
- déformer ledit renflement (52) vers la circonférence extérieure dudit élément (30) de telle sorte que le matériau formant le renflement (52) est pressé contre ledit élément (30).

19. Procédé selon la revendication 18, **caractérisé en ce que** le renflement (52) est déformé de telle sorte qu'il englobe au moins une partie en saillie (56) dudit au moins un élément (30), ladite partie en saillie (56) s'étendant de préférence dans une direction radiale à partir de la circonférence extérieure de l'élément (30).
